# EUROPEAN PATENT SPECIFICATION

(11) **EP 2 579 409 B1**
(45) Date of publication and mention of the grant of the patent: **25.11.2015**
(21) Application number: 12187306.1
(22) Date of filing: 04.10.2012
(51) Int. Cl.: H02G 3/08, H05K 7/02, H01R 9/22

(54) **Electric connection box**
Elektrischer Anschlusskasten
Coffret de connexion électrique

(30) Priority: 07.10.2011 JP 2011222508
(43) Date of publication of application: 10.04.2013
(73) Proprietor: Sumitomo Wiring Systems, Ltd., Yokkaichi-city, Mie 510-8503 (JP)
(72) Inventor: Yoshida, Ryohei, Yokkaichi-city, Mie 510-8503 (JP); Shimada, Yoshihisa, Yokkaichi-city, Mie 510-8503 (JP)
(74) Representative: Winter, Brandl, Fürniss, Hübner, Röss, Kaiser, Polte - Partnerschaft mbB

(56) References cited:
- WO-A1-2010/092633
- JP-A- 2005 005 618
- US-A1- 2004 184 244
- US-A1- 2007 020 968
- US-B1- 6 270 359

## Description

The present invention relates to an electric connection box installed to an automobile or the like, and more particularly, to an electric connection box housing a bus bar lamination body in which bus bars are laminated by interposing a plurality of insulating plates.

There is an electric connection box in which an internal circuit is formed by housing a bus bar lamination body within a case. For example, there is an electric connection box described in JP-A-2005-5618. According to this electric connection box, a plurality of connection terminal portions formed by bending tip ends of the bus bars are provided so as to protrude on an insulating plate. These connection terminal portions are inserted into a plurality of terminal insertion holes provided so as to penetrate the case and set in component attachment portions, such as fuse attachment portions, relay attachment portions, and connector attachment portions, provided so as to protrude on an outer surface of the case. Consequently, it becomes possible to efficiently set the connection terminal portions of the internal circuit in a large number of the component attachment portions provided on the outer surface of the electric connection box. In comparison with a case where the internal circuit is formed by fitting insulation displacement terminals to a signal core wire, it becomes possible to design a compact internal circuit with fewer components.

The electric connection box as above is configured in such a manner that connection terminal portions protruding from the bus bar lamination body of substantially a flat plate shape are set in the component attachment portions. Hence, a plurality of the component attachment portions provided on the outer surface of the electric connection box are often provided on substantially the same plane. It is therefore easy to visually confirm locations where the respective component attachment portions are provided. Accordingly, connectors, relays, and fuses can be attached to the respective component attachment portions provided on the same plane in a reliable manner and an assembling work can be performed smoothly.

However, after the electric connection box as above is installed to a predetermined position in a passenger compartment or the like, a work to replace a component that needs frequent replacing is performed in a state where those that need frequent replacing and those that do not are provided on the same plane. In this instance, a wire harness of connectors or the like attached to other component attachment portions lies in the way and workability becomes poor in some cases.

In particular, in a case where the electric connection box is installed at the back of a work space, it becomes further difficult to access a component attachment portion to which a component that needs frequent replacement is attached and workability is deteriorated.

The invention was devised in view of the foregoing circumstances and has an object to provide an electric connection box of a novel structure capable of enhancing workability for component attachment portions, such as replacement of components, using a simple structure without increasing the number of components.

According to a first aspect of the invention, an electric connection box is configured in such a manner that a bus bar lamination body formed by laminating bus bars by interposing a plurality of insulating plates is housed within a case and a plurality of connection terminal portions provided to end portions of the bus bars are set in a plurality of component attachment portions provided so as to protrude on an outer surface of the case by passing through a plurality of terminal insertion holes provided so as to penetrate the case. The electric connection box is **characterized in that**: the bus bars have bus bar extension portions provided integrally with base end portions of the connection terminal portions and extending a protrusion length of the connection terminal portions from the bus bar lamination body; at least one of a plurality of the component attachment portions is provided with an extension protrusion portion as an integral part between the outer surface of the case and the component attachment portion so that the component attachment portion protrudes on the outer surface of the case, and with a bus bar housing hole provided in an interior of the extension protrusion portion so that the bus bar extension portion is inserted and housed therein; and the bus bar extension potion is positioned by inserting its one end portion, on a side of the bus bar lamination body, into a bus bar through-hole provided so as to penetrate the insulating plates and also positioned by allowing its other end portion, on a side of the connection terminal portion, to be supported by abutting on tip end portion pressing ribs provided to a protrusion tip end portion of the bus bar housing hole so as to protrude inward.

With the electric connection box of the structure according to the invention, at least one component attachment portion is provided with the extension protrusion or extension protrusion portion used to provide the component attachment portion to protrude on the outer surface of the case as an integral part between the outer surface of the case and the component attachment portion. Also, the bus bar is provided with the bus bar extension portion and a protrusion length of the connection terminal portion from the bus bar lamination body is extended. By inserting and arranging the bus bar extension portion into the bus bar housing hole in the extension protrusion, it becomes possible to provide the component attachment portion considerably protruding outward on the outside of the case in comparison with other component attachment portions provided to the outer surface of the case. This component attachment portion is provided so as to protrude outward on the outside of the case in comparison with the other component attachment portions. Hence, not only does it become easy for a worker to access this component attachment portion, but it also becomes possible to prevent deterioration of workability due to interference with a wire harness or the like protruding from connectors attached to other component attachment portions.

Moreover, the bus bar extension portion is positioned and supported by positioning the end portion of the bus bar extension portion on the side of the bus bar lamination body by inserting this end portion into the bus bar through-hole provided so as to penetrate the insulating plates and also by positioning the end portion of the bus bar extension portion on the side of the connection terminal portion using the tip end portion pressing ribs provided to the protrusion tip end portion of the bus bar housing hole. Consequently, it becomes possible to position and support the connection terminal portion with high precision and allow the connection terminal portion to protrude outward on the outside of the case using the bus bar extension portion without requiring other components, such as relay terminals. In particular, by merely providing the tip end portion pressing ribs to the protrusion tip end portion of the bus bar housing hole, it becomes possible to hold the bus bar extension portion in the edge portions on the both sides efficiently in cooperation with the bus bar through-hole in the insulating plates. Hence, even in a case where the protrusion length of the extension protrusion is extended, it becomes possible to avoid the pressing ribs from being provided in a full length of the bus bar housing hole. Consequently, it becomes possible to prevent an increase in amount of resin and a variation in shape of the component attachment portions caused by a sink of resin during molding caused by such an increase in amount of resin. Hence, even in a case where a component attachment portion is provided to considerably protrude outward on the outside of the case using the extension protrusion, it becomes possible to provide a component attachment portion protruding outward on the outside of the case without deteriorating dimensional accuracy of the component attachment portion.

Also, because the bus bar extension portion is inserted into the bus bar housing hole and housed therein, even in a case where a relatively long bus bar extension portion is provided, it becomes possible to advantageously prevent interference with other members and the occurrence of a short circuit caused by such interference. Consequently, the bus bar extension portion is protected and an insulation property is secured.

Preferably, the electric connection box according to the present invention is configured in such a manner that the electric connection box further includes an additional bus bar placed on the insulating plate of an uppermost layer of the bus bar lamination body. The additional bus bar has the connection terminal portion and the bus bar extension portion provided so as to stand on the insulating plate, and the bus bar extension portion is positioned by allowing a portion from an end portion on the side of the connection terminal portion to an intermediate portion to be supported by abutting on tip end and intermediate pressing ribs protruding inward and provided from the protrusion tip end portion of the bus bar housing hole with a length not to reach an opening portion on a side of the base end.

According to this aspect, not only does it become possible to provide the bus bar also on the surface layer portion of the bus bar lamination body, but it also becomes possible to provide the bus bar extension portion and the connection terminal portion so as to stand on the insulating plate. Consequently, it becomes possible to set a larger number of terminal connection portions in component attachment portions provided so as to protrude outward on the outside of the case by the extension protrusion while avoiding an increase of the electric connection box in size. Herein, the end portion of the bus bar extension portion on the side of the bus bar lamination body cannot be held in the bus bar through-hole. However, as compensation, a wide portion of the bus bar extension portion from the intermediate portion to the end portion on the connection terminal side is supported by the long tip end and intermediate pressing ribs extending from the extension tip end portion of the bus bar housing hole with a length not to reach the opening portion on the side of the base end. It thus also becomes possible to advantageously position the bus bar extension portion provided to the additional bus bar.

Moreover, because the extension length of the tip end and intermediate pressing ribs is a length not to reach the opening portion on the side of the base end of the bus bar housing hole from the protrusion tip end portion, in comparison with a case where the tip end and intermediate pressing ribs are provided in the full length of the bus bar housing hole, it becomes possible to advantageously avoid problems, such as an increase in amount of resin and a sink caused by such an increase in amount of resin.

Preferably, the electric connection box according to the present invention is still further configured in such a manner that the tip end and intermediate portion pressing ribs are provided with thickness-reducing recess grooves opening in a center portion in a width direction and edge portions on both sides of abutment surfaces abutting on the bus bar extension portion.

According to this aspect, an amount of resin of the tip end and intermediate portion pressing ribs is advantageously reduced by the thickness-reducing recess grooves. Hence, it becomes possible to further advantageously avoid problems, such as an increase in amount of resin by providing the tip end and intermediate portion pressing ribs and a sink caused by such an increase in amount of resin. Moreover, the thickness-reducing recess grooves are provided to open in the center portion in the width direction and in the edge portions on the both sides of the abutment surfaces of the tip end and intermediate portion pressing ribs abutting on the bus bar extension portion. Hence, it becomes possible to set a supporting position of the bus bar extension portion at two points spaced apart in the width direction of the bus bar. Accordingly, even when the thickness-reducing recess grooves are provided, supporting accuracy of the bus bar extension portion can be advantageously secured.

According to the invention, the protrusion length of the connection terminal portion from the bus bar lamination body is extended by providing the bus bar extension portion. The component attachment portion is provided so as to protrude on the outer surface of the case by providing the extension protrusion as an integral part between the outer surface of the case and the component attachment portion. Also, the bus bar extension portion is inserted into the bus bar housing hole provided in the interior of the extension protrusion and housed therein. Hence, it becomes possible to provide a component attachment portion provided so as to protrude outward on the outside of the case considerably in comparison with the other component attachment portions provided on the outer surface of the case. Consequently, not only does it becomes easy for a worker to access this component attachment portion, but it also becomes possible to perform a replacing work of components of this component attachment portion without a wire harness or the like extending from connectors attached to other component attachment portions getting in the way. Hence, workability can be enhanced. In addition, because the extension protrusion and the bus bar extension portion can be provided integrally with the case and the bus bar, respectively, it becomes possible to provide an electric connection box provided with component attachment portions achieving good workability without increasing the number of components and the steps of assembling work.

The invention now will be more fully described by means of an illustrative but not limiting embodiment thereof in conjunction with the accompanying drawings, in which:
Fig. 1 is an exploded perspective view of an electric connection box according to one embodiment of the invention;
Fig. 2 is a perspective view of the electric connection box shown in Fig. 1 in an assembled state;
Fig. 3 is a perspective view of a bus bar lamination body in the electric connection box shown in Fig. 1;
Fig. 4 is a perspective bottom view of an upper case of the electric connection box shown in Fig. 1;
Fig. 5 is a plan view of the upper case of the electric connection box shown in Fig. 1;
Fig. 6 is a cross section of the upper case taken along the line VI-VI of Fig. 5;
Fig. 7 is a cross section of the upper case taken along the line VII-VII of Fig. 4; and
Fig. 8 is a cross section of the upper case taken along the line VIII-VIII of Fig. 4.

Hereinafter, an embodiment of the invention will be described with reference to the drawings.

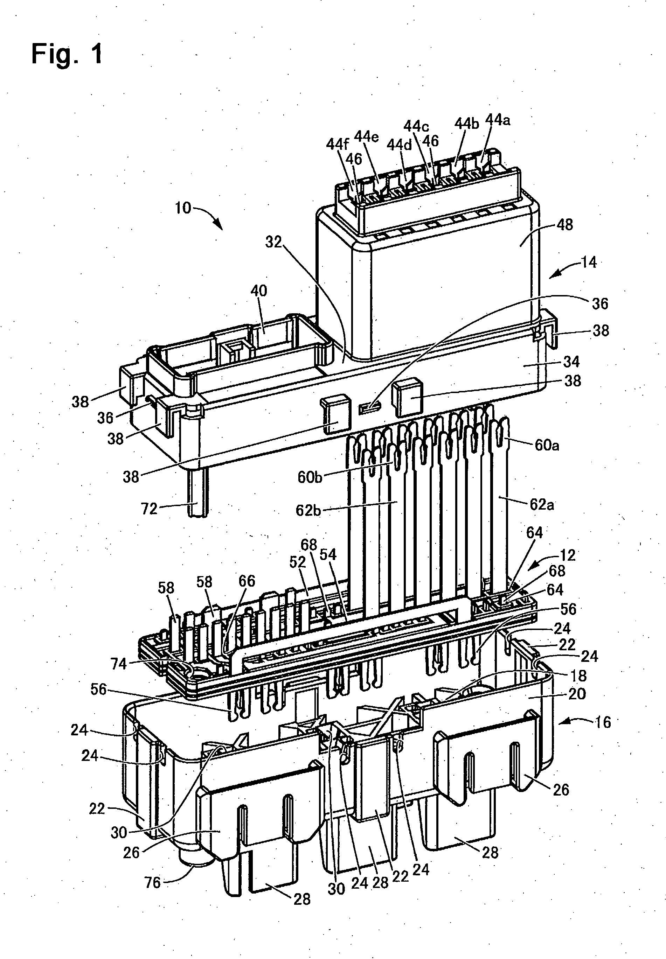

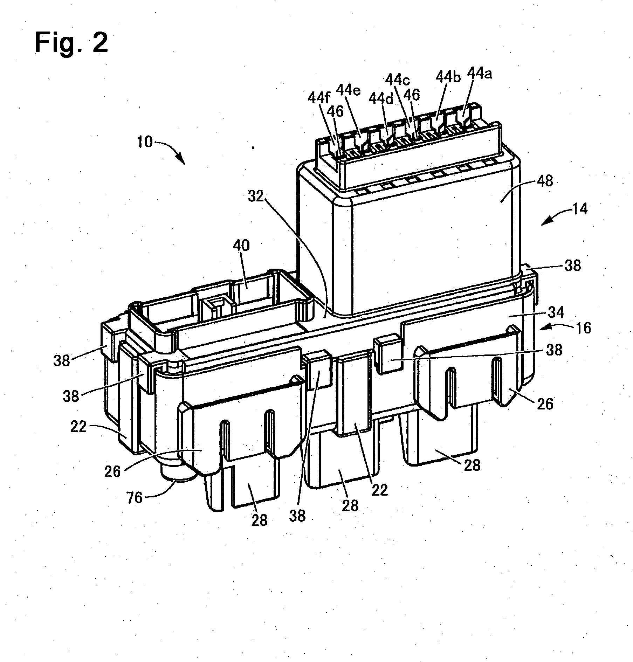

Firstly, Fig. 1 and Fig. 2 show an electric connection box 10 according to an embodiment of the invention. As is shown in the exploded perspective view of Fig. 1, the electric connection box 10 includes a bus bar lamination body 12 forming an internal circuit, an upper case 14, and a lower case 16. The electric connection box 10 housing the bus bar lamination body 12 within a case as shown in the perspective view of Fig. 2 is provided by putting and fitting the upper case 14 and the lower case 16 together from the both sides of the bus bar lamination body 12. In the description below, the term, "upper side", means an upper side in Fig. 1 on which the upper case 14 is present and the term, "lower side", means a lower side in Fig. 1 on which the lower case 16 is present unless specified otherwise.

The lower case 16 is made of synthetic resin and is of a structure in which a circumferential wall 20 of substantially a rectangular frame shape is provided integrally with a bottom wall 18 by protruding upward continuously all along an outer peripheral edge portion of the bottom wall 18. The circumferential wall 20 is provided with locking pieces 22 allowed to slightly undergo deflection in a plate thickness direction at a plurality of (herein, four) points spaced apart in a circumferential direction. Rib housing holes 24 and 24 opening in the edge portion of the circumferential wall 20 are cut out on the both sides having each locking piece 22 in between in a circumferential direction. Also, the circumferential wall 20 is provided with bracket attachment portions 26 at proper points spaced apart in the circumferential direction. The electric connection box 10 is attached fixedly in a passenger compartment or the like as unillustrated brackets provided to a vehicle body are attached to the bracket attachment portions 26.

A plurality of relay attachment portions 28 as component attachment portions are provided so as to protrude on an outer surface (lower side in Fig. 1) of the bottom wall 18 of the lower case 16 so that unillustrated relays are attached to the relay attachment portions 28. A plurality of relay terminal insertion holes 30 provided so as to penetrate the bottom wall 18 are provided to the bottom surface of each relay attachment portion 28. Relay connection terminal portions 56 described below are inserted into the relay terminal insertion holes 30 and set in the relay attachment portions 28.

The upper case 14 is made of the same synthetic resin used for the lower case 16 and is of a structure in which a circumferential wall 34 of substantially a rectangular frame shape is provided integrally with a top wall 32 by protruding downward continuously all along an outer peripheral edge portion of the top wall 32. The circumferential wall 34 is provided with locking claws 36 to be engaged with the locking pieces 22. The locking claws 36 are provided so as to protrude at a plurality of points spaced apart in a circumferential direction at positions at which the locking claws 36 oppose the respective lock pieces 22 of the lower case 16. Also, positioning ribs 38 and 38 to be inserted into the rib housing holes 24 and 24 are provided so as to protrude from the circumferential wall 34 in a hook shape on the both sides having each locking claw 36 in between in the circumferential direction at positions corresponding to the rib housing holes 24 and 24 of the lower case 16.

A connector attachment portion 40 as a component attachment portion or component attachment means is provided so as to protrude on an outer surface (upper side in Fig. 1) of the top wall 32 of the upper case 14, so that connectors provided at an end of an unillustrated wire harness are attached to the connector attachment portion 40. A plurality of connector terminal insertion holes 42 are provided in line so as to penetrate a bottom surface of the connector attachment portion 40. Connector connection terminal portion 58 described below are inserted into the connector terminal insertion holes 42 so as to protrude outside.

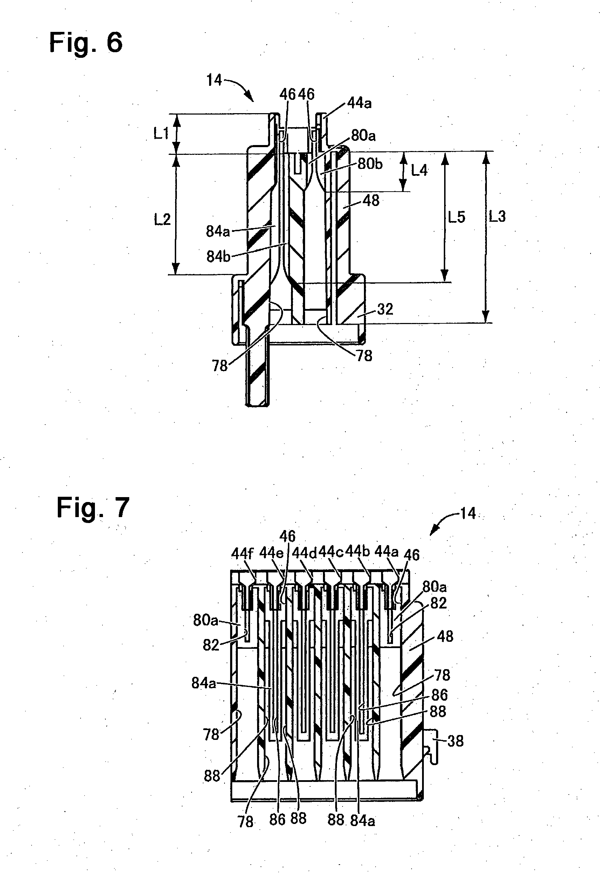

Further, fuse attachment portions 44a through 44f are provided so as to protrude on the outer surface of the top wall 32 of the upper case 14. The fuse attachment portions 44a through 44f are of a structure in which the six fuse attachment portions 44a through 44f are connected in series, to which unillustrated six fuses are attached. A pair of fuse terminal insertion holes 46 are provided so as to penetrate a bottom surface of each of the fuse attachment portions 44a through 44f (see Fig. 6), so that fuse connection terminals 60a and 60b described below are inserted and set therein.

In this embodiment, an extension protrusion 48 (extension protrusion portion) is provided between the outer surface of the top wall 32 of the upper case 14 and the fuse attachment portions 44a through 44f as an integral part. The fuse attachment portions 44a through 44f are provided so as to protrude upward more than the connector attachment portion 40 from the outer surface of the top wall 32 of the upper case 14 via the extension protrusion 48. The extension protrusion 48 is provided so as to protrude upward from the top wall 32 of the upper case 14 while substantially maintaining a rectangular shape in cross section. A plurality of bus bar housing holes 78 described below are provided so as to penetrate an interior of the extension protrusion 48 in a protruding direction.

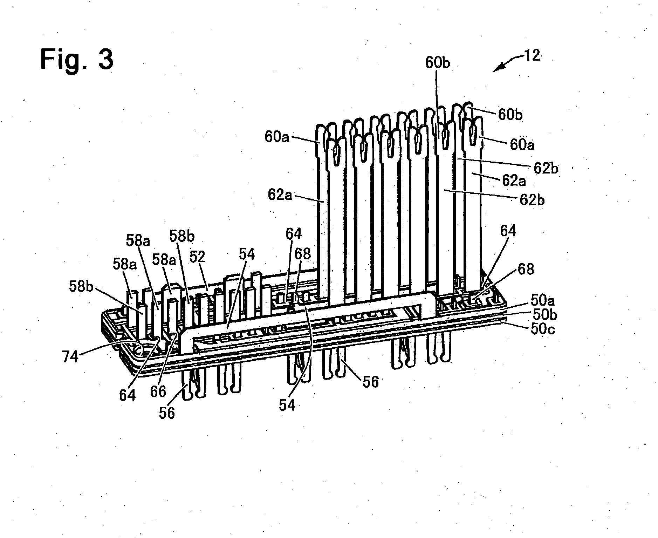

The bus bar lamination body 12 is of a known structure in which, as is shown in Fig. 3, a plurality of bus bars 52 are pinched among a plurality of insulating plates 50a, 50b, and 50c. The bus bars 52 are known and formed by press-punching and bending a conductive metal plate. More specifically, a plurality of the relay connection terminal portions 56 formed by bending end portions of the bus bars 52 are inserted into bus bar through-holes 64 provided so as to penetrate the insulating plates 50b and 50c and protrude downward from the insulating plate 50c. When the bus bar lamination body 12 is incorporated into the lower case 16 from the side of the insulating plate 50c, by inserting the relay connection terminal portions 56 into the relay terminal insertion holes 30 provided to the bottom wall 18 of the lower case 16, the relay connection terminal portions 56 are set in the relay attachment portions 28.

Likewise, connector connection terminal portions 58a and fuse connection terminal portions 60a formed by bending end portions of the bus bars 52 are inserted into the bus bar through-holes 64 provided so as to penetrate the insulating plates 50a and 50b and protrude above the insulating plate 50a. Further, additional bus bars 54 are placed on the uppermost insulating plate 50a and supported thereon. The additional bus bars 54 are positioned by being fit into a bus bar housing groove 66 provided on the insulating plate 50a. Connector connection terminal portions 58b and fuse connection terminal portions 60b formed by bending end portions of the additional bus bars 54 are provided so as to stand on the insulating plate 50a.

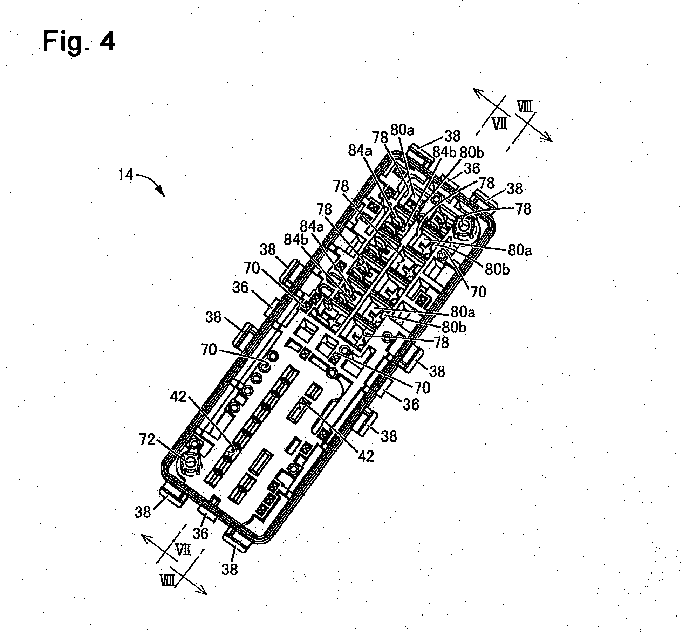

The fuse connection terminal portions 60a provided to the bus bars 52 and the fuse connection terminal portion 60b provided to the additional bus bars 54 include bus bar extension portions 62a and 62b, respectively. The bus bar extension portions 62a and 62b are provided integrally with base end portions of the fuse connection terminals 60a and 60b, respectively, to extend protrusion lengths of the fuse connection terminal portions 60a and 60b, respectively, from the bus bar lamination body 12. The extension lengths of the bus bar extension portions 62a and 62b are set correspondingly to a protrusion length of the extension protrusion 48 from the outer surface of the top wall 32 of the upper case 14 so that the respective fuse connection terminal portions 60a and 60b are inserted into the fuse terminal insertion holes 46 of the fuse attachment portions 44a through 44f and set therein. The additional bus bars 54 placed on the insulating plate 50a are provided with press-fitting ribs 68 and 68 protruding toward the upper case 14 at proper points. The additional bus bars 54 are positioned and supported on the top wall 32 of the upper case 14 as the press-fitting ribs 68 are press-fit into press-fitting holes 70 (see Fig. 4) of a rectangular or circular shape in cross section provided so as to open in an inner surface of the top wall 32 of the upper case 14.

The upper case 14 and the lower case 16 are put and fit together from the both sides of the bus bar lamination body 12 of the structure as above. In this instance, a positioning boss 72 protruding downward from the inner surface of the top wall 32 of the upper case 14 is inserted into a boss insertion hole 74 provided to penetrate the bus bar lamination body 12. Also, a protrusion tip end portion of the positioning boss 72 is fit into a boss housing recess 76 provided to the lower case 16 so as to protrude on the bottom wall 18. Consequently, the bus bar lamination body 12, the upper case 14, and the lower case 16 are positioned with respect to one another and fit together. Also, the upper case 14 and the lower case 16 are positioned with respect to each other as the positioning ribs 38 provided to the upper case 14 are inserted into the rib housing portions 24 provided to the lower case 16. The upper case 14 and the lower case 16 in this state are locked in an assembled state as shown in Fig. 2 by bringing the locking pieces 22 and the locking claws 36 into engagement. Again, reference is herewith explicitly made to the entire disclosure of the above mentioned co-pending two other applications of the same Applicant and of the same day showing advantageous details and means in conjunction with joining the upper case 14 and the lower case 16.

As is obvious from the bottom view of the upper case 14 shown in Fig.4, base end opening portions of a plurality of the bus bar housing holes 78 extending by penetrating through the interior of the extension protrusion 48 are opened in the inner surface of the top wall 32 on which the extension protrusion 48 is provided so as to protrude. The respective bus bar housing holes 78 house therein the bus bar extension portions 62a and 62b provided integrally with the fuse connection terminal portions 60a and 60b, respectively, shown in Fig. 3. As is shown in Fig. 4, a pair of tip end portion pressing ribs 80a and 80b are provided to each of the bus bar housing holes 78 in which the fuse connection terminal portions 60a and the bus bar extension portions 62a provided to the bus bars 52 are inserted and housed. The tip end pressing ribs 80a and 80b protrude inward from opposing wall surfaces of each bus bar housing hole 78. On the other hand, a pair of tip end and intermediate portion pressing ribs 84a and 84b are provided to each of the bus bar housing holes 78 in which the fuse connection terminal portions 60b and the bus bar extension portions 62b provided to the additional bus bars 54 are inserted and housed. The tip end and intermediate portion pressing ribs 84a and 84b protrude inward from opposing wall surfaces of each bus bar housing hole 78.

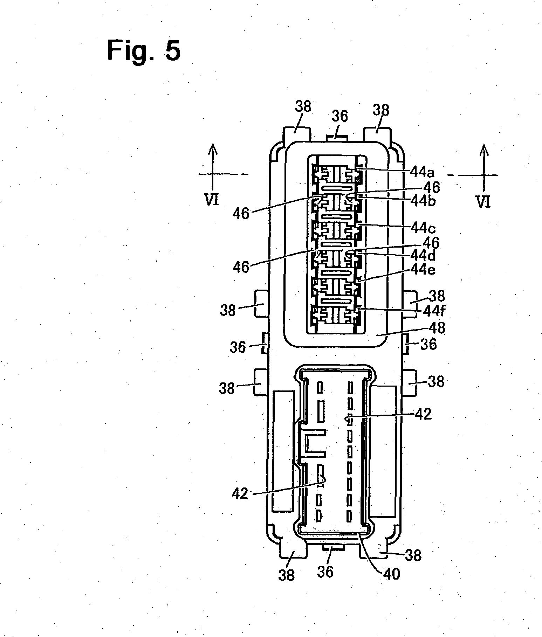

The tip end portion pressing ribs 80a and 80b and the tip end and intermediate portion pressing ribs 84a and 84b will now be described in detail using Fig. 6 showing a cross section of the fuse attachment portion 44a taken along the line VI-VI of Fig. 5 showing a plan view of the upper case 14. As is shown in Fig. 6, the fuse attachment portion 44a is provided so as to protrude on the outer surface of the top wall 32 of the upper case 14 by the extension protrusion 48 provided beneath as an integral part. It is preferable that a protrusion length L2 of the extension protrusion 48 from the outer surface of the top wall 32 of the upper case 14 is longer than a length L1 of the fuse attachment portions 44a from the bottom surface to the protrusion tip end surface by a factor of 2 or greater, and more preferably, 2.5 or greater. This is because the connector attachment portion 40 can be spaced apart from the fuse attachment portion 44a when configured in this manner and it becomes possible to advantageously avoid interference with a wire harness extending from connectors attached to the connector attachment portion 40. Two bus bar housing holes 78 are provided to penetrate the extension protrusion 48 located below the fuse attachment portion 44a. The base end opening portions of the respective bus bar housing holes 78 open in the inner surface of the top wall 32 of the upper case 14 while the opening portions on the side of the protrusion tip end portions of the respective bus bar housing holes 78 open in the bottom surface of the fuse attachment portion 44a and communicate with the respective fuse terminal insertion holes 46.

Referring to Fig. 6, the fuse connection terminal portion 60a and the bus bar extension portion 62a (in the front row at the right end in Fig. 3) of the bus bar 52 protruding above the bus bar lamination body 12 by passing through the bus bar through-holes 64 provided to the insulating plate 50a are inserted and housed in the bus bar housing hole 78 on the right side. A pair of the tip end portion pressing ribs 80a and 80b are provided to the protrusion tip end portion of this bus bar housing hole 78. The tip end portion pressing ribs 80a and 80b protrude inward in a direction to come close to each other from the wall portions opposing in the plate thickness direction of the fuse connection terminal portion 60a and the bus bar extension portion 62a both of a flat plate shape. An extension length L4 of a pair of the tip end portion pressing ribs 80a and 80b from the opening portions on the side of the protrusion tip end portions to the opening portions on the side of the base ends is set to a length of about 15 to 25% of full length L3 of the bus bar housing hole 78. That is, when the length L4 is shorter than a length of 15% of the full length L3, the end portion of the bus bar extension portion 62a on the side of the connection terminal portion is not sufficiently positioned and held in a stable manner. Conversely, when the length L4 is longer than a length of 25% of the full length L3, an extension length of the tip end pressing ribs 80a and 80b becomes excessively long and there is a waste in amount of resin required for the manufacturing. It should be noted that lower end portions of the tip end portion pressing ribs 80a and 80b are tapered so that an amount of inward protrusion gradually degreases toward the lower side.

When the fuse connection terminal portion 60a and the bus bar extension portion 62a protruding above the bus bar lamination body 12 are inserted into the bus bar housing hole 78 as above, the fuse connection terminal portion 60a is inserted into the fuse terminal insertion hole 46 by passing through the opening portion of the bus bar housing hole 78 on the side of the protrusion tip end portion. The fuse connection terminal portion 60a is thus positioned and set in the fuse attachment portion 44a. In this instance, the end portion of the bus bar extension portion 62a on the side of the connection terminal portion is pinched between a pair of the tip end portion pressing ribs 80a and 80b from the both sides in the plate thickness direction and is thereby positioned and held in a stable manner. Also, the end portion of the bus bar extension portion 62a on the side of the bus bar lamination body 12 is inserted into the bus bar through hole 64 and is thereby positioned and held in a stable manner. In this manner, the bus bar extension portion 62a housed in the bus bar housing hole 78 is positioned in a stable manner at the both end portions in the longitudinal direction. Also, because the bus bar extension portion 62a is surrounded by the circumferential wall of the bus bar housing hole 78, an insulation property is secured.

The fuse connection terminal portion 60b and the bus bar extension portion 62b (in the back row at the right end in Fig. 3) of the additional bus bar 54 placed on the uppermost insulating plate 50a and protruding above the bus bar lamination body 12 are inserted and housed in the bus bar housing hole 78 on the left side in Fig. 6. A pair of the tip end and intermediate portion pressing ribs 84a and 84b are provided to this bus bar housing hole 78. The tip end and intermediate portion pressing ribs 84a and 84b protrude inward in a direction to come close to each other from wall portions opposing in a plate thickness direction of the fuse connection terminal portion 60b and the bus bar extension portion 62b both of a flat plate shape. A pair of the tip end and intermediate pressing ribs 84a and 84b extends from the protrusion tip end portion of the bus bar housing hole 78 with a length not to reach the opening portion on the side of the base end. It is preferable to set an extension length L5 of the tip end and intermediate portion pressing ribs 84a and 84b from the opening portion on the side of the protrusion tip end portion to the opening portion on the side of the base end to a length of about 50 to 80% of the full length L3 of the bus bar housing hole 78. That is, when the length L5 is shorter than a length of 50% of the full length L3, the bus bar extension portion 62b cannot be positioned and held sufficiently in a stable manner. Conversely, when the length L5 is longer than a length of 80% of the full length L3, the extension length of the tip end and intermediate portion pressing ribs 84a and 84b becomes excessively long. Accordingly, because an amount of resin required for the manufacturing is increased and the bus bar housing hole 78 becomes thicker, there occurs a sink of resin during molding and such a sink raises a problem of a dimensional error. It should be noted that lower end portions of the tip end and the intermediate portion pressing ribs 84a and 84b are tapered so that an amount of inward protrusion decreases gradually toward the lower side.

The fuse connection terminal portion 60b and the bus bar extension portion 62b of the additional bus bar 54 placed on the uppermost insulating plate 50a are inserted into the bus bar housing hole 78 as above. The end portion of the bus bar extension portion 62b on the side of the bus bar lamination body 12 is fit into the bus bar housing groove 66 provided in the uppermost insulating plate 50a and is therefore merely placed thereon. However, because the tip end and intermediate portion pressing ribs 84a and 84b extend downward more than the tip end portion pressing ribs 80a and 80b, the bus bar extension portion 62b is positioned precisely by the tip end and intermediate pressing ribs 84a and 84b from the beginning of insertion. The fuse connection terminal portion 60b is inserted into the fuse terminal insertion hole 46 by passing through the opening portion of the bus bar housing hole 78 on the side of the protrusion tip end. The fuse connection terminal portion 60b is thus positioned and set in the fuse attachment portion 44a. In this instance, the bus bar extension portion 62b is pinched by a pair of the tip end and intermediate pressing ribs 84a and 84b from the both sides in the plate thickness direction across a wide range from the end portion on the side of the connection terminal portion to the intermediate portion, and is thereby positioned and held in a stable manner. It thus becomes possible to position and hold the fuse connection terminal portion 60b and the bus bar extension portion 62b of the additional bus bar 54 placed on the uppermost insulating plate 50a in a stable manner. As with the bus bar extension portion 62a, because the bus bar extension portion 62b is surrounded by the circumferential wall of the bus bar housing hole 78, an insulation property is secured.

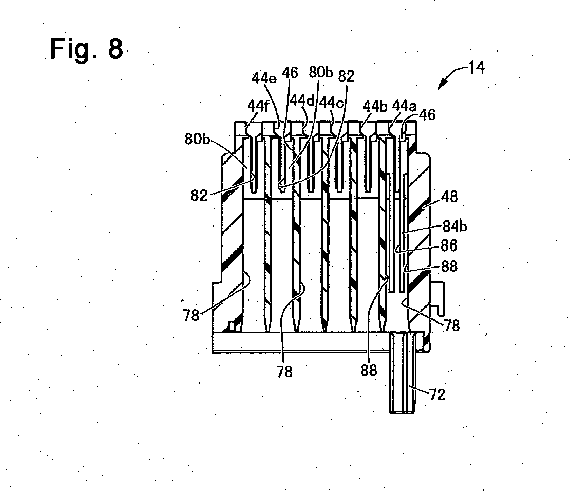

Further, as is shown in Fig. 7 and Fig. 8, a thickness-reducing recess groove 82 is provided to a pair of the tip end pressing ribs 80a and 80b so as to open with a certain length in a center portion in the width direction, and an amount of resin is reduced. Also, a center thickness-reducing recess groove 86 and two-sided edge portion thickness-reducing recess grooves 88 are provided to a pair of the tip end and intermediate pressing ribs 84a and 84b so as to open in a center portion in the width direction and on the edge portions on the both sides, respectively. Accordingly, even when a pair of the tip end and intermediate pressing ribs 84a and 84b is provided in a predetermined length, problematic thickening of the bus bar housing hole 78 can be avoided. Hence, it becomes possible to advantageously avoid problems, such as the occurrence of a sink of resin during molding caused by the thickening and a variation in shape of the fuse attachment portions 44a through 44f caused by such a sink.

With the electric connection box 10 of the embodiment having the structure as above, the fuse attachment portions 44a through 44f are provided so as to protrude on the outer surface of the top wall 32 of the upper case 14 via the extension protrusion 48. Consequently, the fuse attachment portions 44a through 44f protrude above more than the connector attachment portion 40. Hence, a worker is allowed to easily access the fuse attachment portions 44a through 44f that need frequent replacing of components. Also, the fuse attachment portions 44a through 44f are spaced apart from the connector attachment portion 40 in a top-bottom direction on the outer surface of the top wall 32 of the upper case 14. Hence, it becomes possible to avoid a problem that the fuse attachment portions 44a through 44f are covered with a wire harness extending from connectors attached to the connector attachment portion 40. It thus becomes possible to advantageously enhance workability for the fuse attachment portions 44a through 44f.

Moreover, the extension protrusion 48 and the bus bar extension portions 62a and 62b inserted into the bus bar housing holes 78 provided so as to penetrate the extension protrusion 48 are provided integrally with the upper case 14, the bus bars 52, and the additional bus bar 54. Hence, it becomes possible to enhance workability for the fuse attachment portions 44a through 44f without increasing the number of components.

Also, the tip end of the bus bar extension portion 62a on the side of the bus bar lamination body 12 is positioned by inserting this tip end into the bus bar through-hole 64 provided so as penetrate the insulating plate 50a. At the same time, the tip end of the bus bar extension portion 62a on the side of the connection terminal portion is positioned by pinching this tip end between the tip end portion pressing ribs 80a and 80b provided to the protrusion tip end portion of the bus bar housing hole 78. Hence, the bus bar extension portion 62a is positioned and supported in a stable manner efficiently. Consequently, it becomes possible to set the fuse connection terminal portions 60a in the fuse attachment portions 44a through 44f by positioning and supporting the fuse connection terminal portions 60a with high precision using the bus bar extension portions 62a without requiring other components, such as relay terminals. Also, even in a case where a protrusion length of the extension protrusion 48 is extended, it is possible to avoid the pressing ribs from being provided to the bus bar housing holes 78 in full length. It thus becomes possible to advantageously prevent an increase in amount of resin and a variation in shape of the fuse attachment portions 44a through 44f caused by a sink of resin during molding caused by such an increase in amount of resin. In short, according to the embodiment, it becomes possible to provide the fuse attachment portions 44a through 44f considerably protruding outward on the outside of the upper case 14 by the extension protrusion 48 without deteriorating dimensional accuracy of the fuse attachment portions 44a through 44f and increasing the number of components.

Further, the additional bus bars 54 are placed on the uppermost insulating plate 50a of the bus bar insulating body 12 and the fuse attachment portions 44a through 44f are formed by using the bus bar extension portions 62b and the fuse connection terminal portions 60b provided to the additional bus bars 54. Hence, it becomes possible to provide the additional bus bars 54 having the bus bar extension portions 62b and the fuse connection terminal portions 60b by avoiding an increase of the electric connection box 10 in size. Moreover, the bus bar extension portion 62b is positioned by pinching a wide range from the side of the connection terminal portion to the intermediate portion between the tip end and intermediate portion pressing ribs 84a and 84b provided in the bus bar housing hole 78 and having a relatively long extension length. Hence, even when the bus bar extension portion 62b is not positioned by the bus bar through-hole 64 of the insulating plate 50a, the bus bar extension portion 62b can be positioned and held in a stable manner.

Moreover, the center thickness-reducing recess groove 86 and the two-sided edge portion thickness-reducing recess grooves 88 and 88 are provided to the tip end and intermediate portion pressing ribs 84a and 84b so as to open in the center portion in the width direction and in the edge portions on the both sides, respectively. Hence, thickening of the bus bar housing hole 78 is avoided. Accordingly, it becomes possible to advantageously avoid problems, such as the occurrence of a sink of resin during molding caused by thickening and a variation in shape of the fuse attachment portions 44a through 44f caused by such a sink. Also, even when the center thickness-reducing recess groove 86 and the two-sided edge portion thickness-reducing recess grooves 88 and 88 are provided to the tip end and intermediate portion pressing ribs 84a and 84b, the bus bar extension portion 62b is pinched by the tip end and intermediate portion pressing ribs 84a and 84b at two points spaced apart in the width direction thereof. Hence, the bus bar extension portion 62b is supported in a reliable manner.

While the embodiment of the invention has been described in detail, it should be appreciated that the invention is not limited to the specific description above. For example, the protrusion length of the extension protrusion 48 can be set suitably in consideration of an installation space in a range within which workability is enhanced. Also, component attachment portions other than the fuse attachment portions 44a through 44f may be provided so as to protrude via the extension protrusion 48.

The embodiment above has described a case where the bus bar extension portions 62a and 62b are provided to both of the bus bars 52 and the additional bus bars 54. However, it is possible to form the fuse attachment portions 44a through 44f using the bus bar extension portions 62a and the fuse connection terminal portions 60a provided to the bus bars 52 alone and by providing the tip end portion pressing ribs 80 alone to each bus bar housing hole 78 of the extension protrusion 48.

Summarizing insofar, in order to provide an electric connection box of a novel structure capable of enhancing workability for component attachment portions using a simple structure without increasing the number of components, an extension protrusion is provided between an outer surface of a case and component attachment portions so that the component attachment portions protrude on the outer surface of the case. Also, a bus bar extension portion extending a protrusion length of a connection terminal portion from a bus bar lamination body is provided to a base end portion of the connection terminal portion. The bus bar extension portion is housed in a bus bar housing hole provided so as to penetrate an interior of the extension protrusion. Also, the bus bar extension portion is positioned by inserting an end portion on the side of the bus bar lamination body into a bus bar insertion hole provided so as to penetrate an insulating plate. At the same time, the bus bar extension portion is positioned by allowing an end portion of the bus bar extension portion on the side of the connection terminal portion to be supported by abutting on tip end portion pressing ribs provided to a protrusion tip end portion of the bus bar housing hole.

### [Description of major or important reference numerals and signs]

10: electric connection box
12: bus bar lamination body
14: upper case (case)
28: relay attachment portion (component attachment portion)
40: connector attachment portion (component attachment portion)
44a through 44f: fuse attachment portions (component attachment portions)
46: fuse terminal insertion hole (terminal insertion hole)
48: extension protrusion
50a, 50b, and 50c: insulating plates
52: bus bar
54: additional bus bar
60a and 60b: fuse connection terminal portions (connection terminal portions)
62a and 62b: bus bar extension portions
64: bus bar through-hole
78: bus bar housing hole
80a and 80b: tip end portion pressing ribs
84a and 84b: tip end and intermediate portion pressing ribs
86: center thickness-reducing recess groove
88: two-sided edge portion thickness-reducing recess groove

## Claims

1. An electric connection box (10) in which a bus bar lamination body (12) formed by laminating bus bars (52) by interposing a plurality of insulating plates (50) is housed within a case (14) and a plurality of connection terminal portions (60) provided to end portions of the bus bars (52) are set in a plurality of component attachment portions (44) provided so as to protrude on an outer surface of the case by passing through a plurality of terminal insertion holes (46) provided so as to penetrate the case, the electric connection box being **characterized in that**:
the bus bars (52) have bus bar extension portions (62) provided integrally with base end portions of the connection terminal portions (60) and extending a protrusion length of the connection terminal portions from the bus bar lamination body (12);
at least one of a plurality of the component attachment portions (44) is provided with an extension protrusion portion (48) as an integral part between the outer surface of the case and the component attachment portion so that the component attachment portion (44) protrudes on the outer surface of the case, wherein a bus bar housing hole (78) is provided in an interior of the extension protrusion portion (48) so that the bus bar extension portion (62) is inserted and housed therein; and
the bus bar extension portion (62) is positioned by inserting its one end portion, on a side of the bus bar lamination body (12), into a bus bar through-hole (64) provided so as to penetrate the insulating plates (50) and also positioned by allowing its other end portion, on a side of the connection terminal portion (60), to be supported by abutting on tip end portion pressing ribs (80) provided to a protrusion tip end portion of the bus bar housing hole (78) so as to protrude inward.

2. The electric component box according to claim 1, further comprising:
an additional bus bar (54) placed on the insulating plate of an uppermost layer of the bus bar lamination body (12),
wherein:
the additional bus bar (54) has the connection terminal portion and the bus bar extension portion provided so as to stand on the insulating plate, and the bus bar extension portion is positioned by allowing a portion from an end portion on the side of the connection terminal portion to an intermediate portion to be supported by abutting on tip end and intermediate pressing ribs (84) protruding inward and provided from the protrusion tip end portion of the bus bar housing hole with a length not to reach an opening portion on a side of the base end.

3. The electric connection box according to claim 2, wherein:
the tip end and intermediate portion pressing ribs (84) are provided with thickness-reducing recess grooves (86) opening in a center portion in a width direction and edge portions on both sides of abutment surfaces abutting on the bus bar extension portion.

## Patentansprüche

1. Ein elektrischer Anschlusskasten (10), in welchem ein Busschienenlaminatkörper (12), der durch Laminieren von Busschienen (52) unter Zwischenschaltung einer Mehrzahl von isolierenden Platten (50) gebildet ist, innerhalb eines Gehäuses (14) aufgenommen ist und eine Mehrzahl von Verbindungsanschlussabschnitten (60) an Endabschnitten der Busschienen (52) in einer Mehrzahl von Bauteilanbringabschnitten eingesetzt ist, die so angeordnet sind, dass sie zu einer Außenfläche des Gehäuses vorstehen, in dem sie durch eine Mehrzahl von Anschlusseinführöffnungen (46) geführt sind, welche das Gehäuse durchtreten, wobei der elektrische Anschlusskasten **dadurch gekennzeichnet ist, dass**:
die Busschienen (52) Busschienenverlängerungsabschnitte (62) aufweisen, welche einteilig mit Basisendabschnitten der Verbindungsanschlussabschnitte (60) ausgebildet sind und sich um eine Vorstehlänge der Verbindungsanschlussabschnitte von dem Busschienenlaminatkörper (12) erstrecken;
wenigstens einer aus der Mehrzahl der Bauteilanbringabschnitte (44) mit einem Verlängerungsvorstehabschnitt (48) als einem einteiligen Teil zwischen der Außenfläche des Gehäuses und dem Bauteilanbringabschnitt versehen ist, sodass der Bauteilanbringabschnitt (44) an einer Außenfläche des Gehäuses vorsteht, wobei eine Busschienenaufnahmeöffnung (78) in einem Inneren des Verlängerungsvorstehabschnitts (48) vorgesehen ist, sodass der Busschienenverlängerungsabschnitt (62) hierin eingesetzt und aufgenommen ist; und
der Busschienenverlängerungsabschnitt (62) positioniert ist, indem sein einer Endabschnitt auf einer Seite des Busschienenlaminatkörpers (12) in eine Busschienendurchgangsöffnung (64) eingesetzt ist, die so angeordnet ist, dass sie die isolierenden Platten (50) durchtritt und weiterhin positioniert ist, indem sein anderer Endabschnitt auf Seiten des Verbindungsanschlussabschnittes (60) gelagert ist, in welchem er an Spitzenendabschnittdruckrippen (80) anliegt, die an einem vorstehenden Spitzenendabschnitt der Busschienenaufnahmeöffnung (78) angeordnet sind, um nach innen vorzustehen.

2. Der elektrische Anschlusskasten nach Anspruch 1, weiterhin aufweisend:
eine zusätzliche Busschiene (54), welche auf der isolierenden Platte einer obersten Schicht des Busschienenlaminatkörpers (12) angeordnet ist,
wobei:
die zusätzliche Busschiene (54) den Verbindungsanschlussabschnitt und den Busschienenverlängerungsabschnitt derart aufweist, dass diese von der isolierenden Platte hochstehen, wobei der Busschienenverlängerungsabschnitt positioniert ist, indem ein Abschnitt von einem Endabschnitt auf Seiten des Verbindungsanschlussabschnitts bis zu einem Zwischenabschnitt durch Anlage an Spitzenenden- und Zwischenabschnittdruckrippen (84) gestützt ist, welche von dem vorstehenden Spitzenendabschnitt der Busschienenaufnahmeöffnung um eine Länge so nach innen vorstehen, dass sie einen Öffnungsabschnitt an einer Seite des Basisendes nicht erreichen.

3. Der elektrische Anschlusskasten nach Anspruch 2, wobei:
die Spitzenenden- und Zwischenabschnittdruckrippen (84) mit die Dicke verringernden Vertiefungsausnehmungen (86) versehen sind, welche sich in Breitenrichtung in einem mittigen Abschnitt öffnen, sowie mit Kantenabschnitten an beiden Seiten von Anlageflächen, die an dem Busschienenverlängerungsabschnitt anliegen.

## Revendications

1. Boîtier de jonction électrique (10) dans lequel un corps de laminage de barre-bus (12) formé par laminage de barre-bus (52) en interposant une pluralité de plaques d'isolation (50) est contenu à l'intérieur d'un compartiment (14) et une pluralité de parties de bornes de liaison (60) formées sur des parties d'extrémité des barres-bus (52) sont placées dans une pluralité de parties de fixation de composant (44) agencées de manière à venir en saillie sur une surface externe du compartiment en passant à travers une pluralité d'orifices d'insertion de borne (46) formés de manière à pénétrer le compartiment, le boîtier de jonction électrique étant **caractérisé en ce que** :
les barres-bus (52) comportent des parties d'extension de barre-bus (62) formées de manière unitaire avec des parties d'extrémité de base des parties de borne de liaison (60) et s'étendant sur une longueur de saillie des parties de borne de liaison à partir du corps de laminage de barre-bus (12) ;
au moins l'une d'une pluralité de parties de fixation de composant (44) comporte une partie de saillie en extension (48) sous la forme d'une partie unitaire entre la surface externe du compartiment et la partie de fixation de composant de telle sorte que la partie de fixation de composant (44) est en saillie sur la surface externe du compartiment, dans lequel un orifice de logement de barre-bus (78) est agencé sur une partie interne de la partie de saillie en extension (48) de telle sorte que la partie d'extension de barre-bus (62) est insérée et contenue dans celle-ci ; et
la partie d'extension de barre-bus (62) est positionnée en insérant sa première partie d'extrémité, sur un côté du corps de laminage de barre-bus (12), dans un orifice traversant de barre-bus (64) agencé de manière à pénétrer les plaques d'isolation (50) et positionné aussi en permettant que son autre partie d'extrémité, sur un côté de la partie borne de liaison (60), soit supportée par mise en butée sur des nervures de pression de partie d'extrémité de pointe (80) agencées sur une partie d'extrémité de pointe en saillie de l'orifice de logement de barre-bus (78), de manière à s'étendre vers l'intérieur.

2. Boîtier de composant électrique selon la revendication 1, comprenant en outre :
une barre-bus supplémentaire (54) placée sur la plaque d'isolation d'une couche la plus haute du corps de laminage de barre-bus (12),
dans lequel :
la partie de borne de liaison et la partie d'extension de barre-bus de la barre-bus supplémentaire (54) sont agencées de manière à se dresser sur la plaque d'isolation, et la partie d'extension de barre-bus est positionnée en permettant qu'une partie d'une partie d'extrémité du côté de la partie de borne de liaison à une partie intermédiaire soit supportée par mise en butée sur une extrémité de pointe et des nervures de pression intermédiaires (84) en saillie vers l'intérieur et présentant, à partir de la partie d'extrémité de pointe en saillie de l'orifice de logement de barre-bus, une longueur ne permettant pas d'atteindre une partie d'ouverture sur un côté de l'extrémité de base.

3. Boîtier de jonction électrique selon la revendication 2, dans lequel :
l'extrémité de pointe et les nervures de pression de partie intermédiaire (84) comportent des rainures en creux de réduction d'épaisseur (86) débouchant dans une partie centrale suivant une direction transversale et des parties de bord sur les deux côtés des surfaces de butée venant en butée sur la partie d'extension de barre-bus.
